# EUROPÄISCHE PATENTSCHRIFT

(11) **EP 1 611 363 B1**
(45) Veröffentlichungstag und Bekanntmachung des Hinweises auf die Patenterteilung: **24.01.2007**
(21) Anmeldenummer: 04718254.8
(22) Anmeldetag: 08.03.2004
(51) Int. Cl.: F16D 1/12

(54) **UMLENKHEBEL**
DEFLECTION LEVER
LEVIER DE RENVOI

(30) Priorität: 09.04.2003 DE 10316722
(43) Veröffentlichungstag der Anmeldung: 04.01.2006
(73) Patentinhaber: SIEMENS AKTIENGESELLSCHAFT, 80333 München (DE)
(72) Erfinder: CHYLA, Thomas, 14089 Berlin (DE); LÖBNER, Friedrich, 10965 Berlin (DE)
(86) Internationale Anmeldenummer: PCT/DE2004/000490
(87) Internationale Veröffentlichungsnummer: WO 2004/092604

(56) Entgegenhaltungen:
- FR-A- 2 637 953
- US-A- 1 421 408
- US-A- 3 255 641
- US-A- 6 053 076

## Beschreibung

Die Erfindung bezieht sich auf einen Umlenkhebel mit einer Justiereinrichtung, wobei der Umlenkhebel eine Ausnehmung aufweist und die Justiereinrichtung winkelsteif mit einer Welle verbindbar ist, und wobei die Justiereinrichtung einen Hebelarm aufweist, der an einem justierbaren Anschlag festlegbar ist.

Ein Umlenkhebel geht beispielsweise aus der Gebrauchsmusterschrift DE 200 17 252 U1 hervor. Der bekannte Umlenkhebel ist formschlüssig auf eine Welle aufsteckbar. Dazu weist die Welle eine Außenverzahnung auf, welche die Position des Umlenkhebels auf der Welle festlegt.

Je nach Gestaltung der Verzahnung ist eine Justage des Umlenkhebels auf der Welle nur innerhalb einer durch die Zahnteilung festgelegten Schrittweite möglich.

Aus der FR 2 637 953 ist ein eingangs genannter Umlenkhebel mit einer Justiereinrichtung bekannt. Die dortige Ausgestaltung sieht vor, dass zwei koaxial zueinander angeordnete Scheiben relativ zueinander verdreht werden. Zur Verdrehung ist eine Schraube vorgesehen, auf deren Gewindegang eine als Anschlag dienende Mutter verschiebbar angeordnet ist. Durch eine Verdrehung der Schraube wird die Relativbewegung zwischen den beiden Scheiben hervorgerufen.

Sowohl die beiden Scheiben als auch die Ausgestaltung und Lagerung der Schraube und der Mutter setzen eine Fertigung der einzelnen Elemente mit einer geringen Toleranzen voraus.

Der Erfindung liegt die Aufgabe zugrunde, ein Umlenkhebel mit einer Justiereinrichtung der eingangs genannten Art derart auszubilden, dass eine kostengünstige und robuste Justierung der Winkelposition des Umlenkhebels relativ zu einer Welle ermöglicht ist.

Die Aufgabe wird bei einem Umlenkhebel der eingangs genannten Art erfindungsgemäß dadurch gelöst, dass der Anschlag längs einer Achse verschiebbar ist, die rechtwinklig zur Drehachse der Welle liegt, wobei die Ausnehmung drehbeweglich von der Justiereinrichtung durchdrungen ist.

Durch die rechtwinklige Lage können einfach zu fertigende robuste Baugruppen verwendet werden.

Entlang einer Achse ist der Anschlag leicht verschiebbar. Längs der Achse ist beispielsweise eine Skala vorsehbar, nach welcher eine Einstellung unkompliziert vorgenommen werden kann. Die Skala kann in verschiedenen Größen, wie beispielsweise Drehwinkel oder Länge, kalibriert sein. Die Achse, entlang welcher der Anschlag verschiebbar ist, kann dabei beispielsweise durch die Drehachse der Welle verlaufen oder auch windschief zu der Drehachse liegen.

Durch die Justiereinrichtung ist es möglich, den Umlenkhebel bereits in einem auf die Welle aufgesteckten Zustand zu justieren. Ein Auf- und Abstecken des Umlenkhebels zur Justage wird so vermieden. Dies ist insbesondere dann von Vorteil, wenn eine Justage des Umlenkhebels im eingebauten Zustand notwendig ist. Derartige Umlenkhebel werden beispielsweise in den Antriebssträngen von Hochspannungs-Leistungsschaltern verwendet. Im Zuge wiederholter Bewegungen einer kinematischen Kette, in welcher der Umlenkhebel angeordnet ist, kann es zu einer Dejustage kommen. Durch eine Einstellung des Umlenkhebels sind diese Abweichungen ausgleichbar. Die Justiereinrichtung ist vollständig an dem Umlenkhebel angeordnet. Dadurch ist es möglich, einen erfindungsgemäßen Umlenkhebel auch in an sich bekannten Hebelketten zu verwenden. Zusätzliche Vorrichtungen oder Elemente werden nicht benötigt. Weiterhin ermöglicht die drehbewegliche Lagerung der Justiereinrichtung eine stufenlose Anpassung der Lage des Umlenkhebels. Bei einer Anordnung des Anschlages an dem Umlenkhebel ist die gesamte Konstruktion unmittelbar an diesem angeordnet.

Eine weitere vorteilhafte Ausgestaltung kann vorsehen, dass der Anschlag von einer Nut gebildet ist.

Eine Nut gestattet es, unter Nutzung der Nutflanken einen Anschlag auszubilden, welcher in mehreren Richtungen wirkt. Neben der Festlegung durch die Flanken ist es weiterhin gestattet, den Anschlagspunkt des Hebelarmes innerhalb der Nut zu verschieben. Dadurch ist eine einfache Konstruktion geschaffen, welche eine Drehbewegung in zwei Richtungen überträgt und dabei einstellbar ist. Ein derartiger Anschlag ist leicht einstellbar, ohne die gesamte Konstruktion selbst zu demontieren.

Weiterhin kann vorteilhaft vorgesehen sein, dass in der Nut ein Nutenstein geführt ist, mit welchem der Hebelarm verbunden ist.

Durch das Einlegen eines Nutensteines wird die Übertragung der Kräfte zwischen den aneinanderliegenden Flächen verbessert. Gleichzeitig werden die zu übertragende Kräfte auf einem größeren Bereich der Nutflanken verteilt. Dadurch ist ein Ausbrechen oder ein Ausschlagen der Nut verhindert.

Eine weitere vorteilhafte Ausgestaltung kann vorsehen, dass bei einer Projektion in Richtung der Drehachse der Welle zwischen der Hebelachse des Umlenkhebels und der Längsachse der Nut ein spitzer Winkel gebildet ist.

Der spitze Winkel gestattet es, die Nut längs einer Achse zu verschieben und dabei den Hebelarm in der Nut eingekoppelt zu belassen. Durch die geringe Steigung sind die Kräfte zum Einstellen des Anschlages vermindert. Dadurch ist die Hebelkette im montierten Zustand belassbar und die Auswirkungen der Justage an dem Umlenkhebel können zeitgleich auch an den weiteren Elementen beobachtet werden. Dadurch wird die Justierung vereinfacht.

Eine weitere Ausgestaltung kann vorsehen, dass die Justiereinrichtung eine Hülse ist.

Eine Hülse gestattet einerseits eine drehbewegliche Lagerung der Justiereinrichtung in der Ausnehmung des Umlenkhebels. Andererseits ist eine Hülse leicht auf eine Welle aufsteckbar und mit der Welle winkelsteif verbindbar. Eine Hülse vergrößert den Durchmesser der Welle nur in einem geringen Maß, so dass durch die Justiereinrichtung die Konstruktion des Umlenkhebels selbst nur an einem relativ geringem Umfange vergrößert ist. Die Hülse kann dabei derart ausgestaltet sein, dass sie nach Art eines Hohlzylinders eine durchgehende Öffnung zur Aufnahme der Welle aufweist oder die Hülse topfartig an einem Ende geschlossen ist.

Im Folgenden wird ein Ausführungsbeispiel der Erfindung anhand einer Zeichnung schematisch gezeigt und näher beschrieben.

Dabei zeigt die
- Figur 1: einen Umlenkhebel an einem Hochspannungs-Leistungsschalter, die
- Figur 2: eine Explosionsdarstellung des aus der Figur 1 bekannten Umlenkhebels und die.
- Figur 3: eine Explosionsdarstellung eines Umlenkhebels mit einer abgewandten Justiereinrichtung.

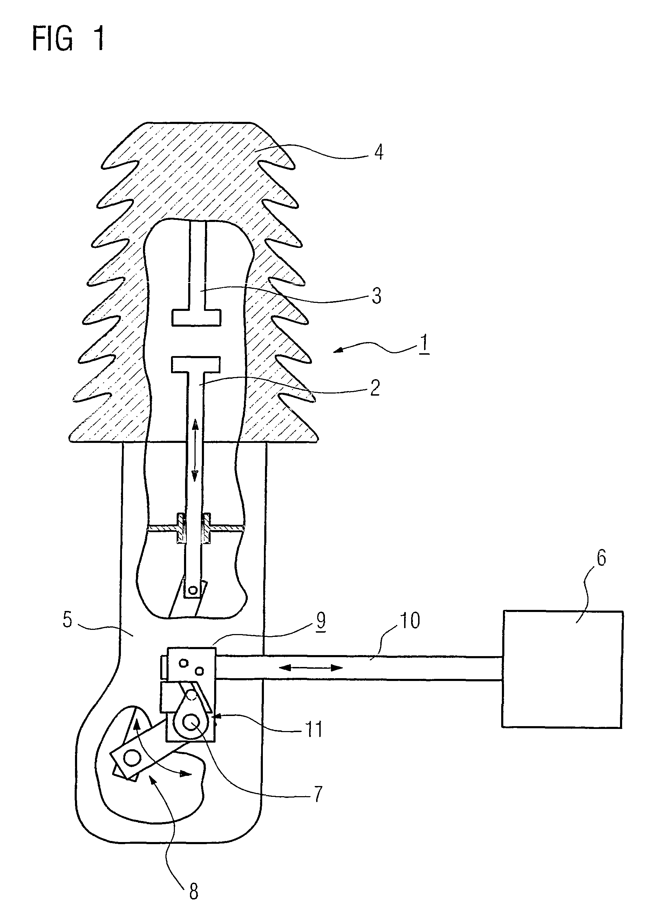

Die Figur 1 zeigt eine Seitenansicht eines teilweise mit Freischneidungen versehenen Hochspannungs-Leistungsschalters 1. Der Hochspannungs-Leistungsschalter 1 weist ein Kontaktsystem auf, welches aus einem bewegbaren ersten Kontaktstück 2 und einem starren zweiten Kontaktstück 3 gebildet ist. Das erste Kontaktstück 2 sowie das zweite Kontaktstück 3 sind innerhalb eines isolierenden Gehäuses 4 angeordnet. Das isolierende Gehäuse 4 ist von einem Umlenkgehäuse 5 getragen.

Das erste Kontaktstück 2 ist über eine kinematische Kette an einem Antrieb 6 angekoppelt. Teil der kinematischen Kette ist eine Welle 7. Die Welle 7 ist an dem Umlenkgehäuse 5 gelagert und durchdringt eine Wandung des Umlenkgehäuses 5. Über eine Pleulkombination 8 wird im Innern des Umlenkgehäuses 5 eine Drehbewegung der Welle 7 in eine lineare Bewegung des ersten Kontaktstückes 2 umgewandelt. Mittels der Welle 7 ist eine Drehbewegung durch eine Wandung des Umlenkgehäuses 5 hindurch übertragbar. Die Durchtrittsstelle der Welle 7 an dem Umlenkgehäuse 5 ist mittels Dichtringen leicht abdichtbar, so dass das Innere des Hochspannungs-Leistungsschalter hermetisch von seiner Umgebung abgeschlossen ist. Somit ist eine Befüllung des Inneren des Hochspannungs-Leistungsschalters 1 beispielsweise mit einem unter erhöhtem Druck stehenden elektronegativen Gas möglich.

An dem außerhalb des Umlenkgehäuses 5 befindlichen Ende der Welle 7 ist ein Umlenkhebel 9 angeordnet. Der Umlenkhebel 9 ist über eine Antriebsstange 10 an den Antrieb 6 angekoppelt und wandelt eine lineare Bewegung der Antriebsstange 10 über die Welle 7 in eine Drehbewegung um. Der Umlenkhebel 9 weist eine Justiereinrichtung 11 auf. Mittels der Justiereinrichtung 11 ist die Lage des Umlenkhebels 9 an der Welle 7 einstellbar. Da der Umlenkhebel 9 vollständig außerhalb des Hochspannungs-Leistungsschalters 1 angeordnet ist, kann eine Justage der kinematischen Kette, die zum Antrieb des ersten Kontaktstückes 2 dient, vollständig außerhalb des Hochspannungs-Leistungsschalters 1 erfolgen. So ist es beispielsweise möglich, den Kontaktabstand zwischen dem ersten Kontaktstück 2 und dem zweiten Kontaktstück 3 einzustellen, ohne in das Innere des Hochspannungs-Leistungsschalters 1 eingreifen zu müssen.

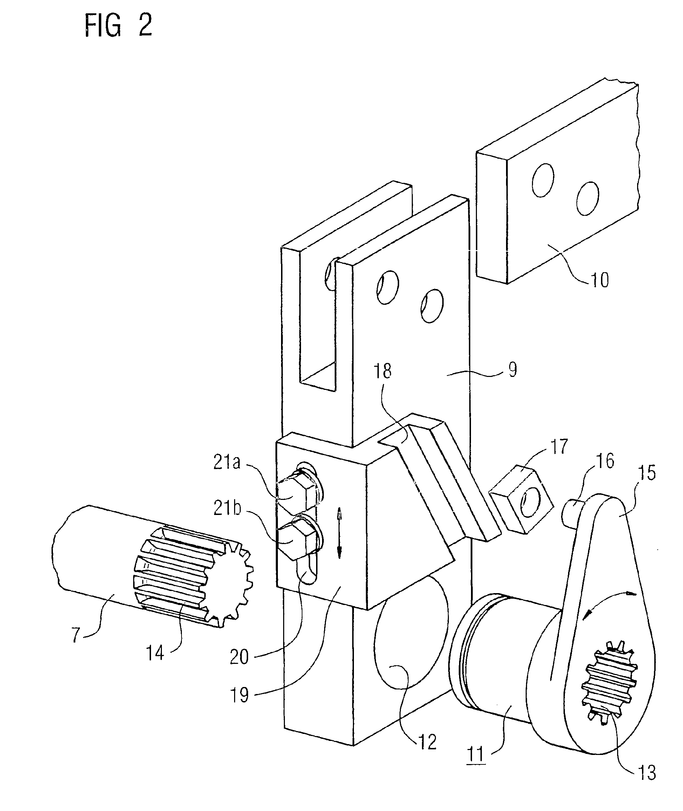

Die Figur 2 zeigt eine Explosionsdarstellung des Umlenkhebels 9 mit der Justiereinrichtung 11. Die Antriebsstange 10 ist mittels eines in der Figur 2 nicht dargestellten Bolzens an den Umlenkhebel 9 ankoppelbar. Der Umlenkhebel 9 weist eine Ausnehmung 12 auf, welche von der Justiereinrichtung 11 durchdrungen ist. Im vorliegenden Falle ist die Justiereinrichtung 11 als Hülse ausgebildet. Die Justiereinrichtung 11 ist innerhalb der Ausnehmung 12 drehbar gelagert. Die Justiereinrichtung 11 weist weiterhin eine Ausnehmung 13 auf, welche im montierten Zustand koaxial zu der Ausnehmung 12 des Umlenkhebels 9 angeordnet ist. Die Ausnehmung 13 der Justiereinrichtung 11 dient der Aufnahme der Welle 7. Zur kraftschlüssigen Verbindung der Justiereinrichtung 11 ist deren Ausnehmung 13 mit einer Innenverzahnung versehen, welche mit einer auf dem außerhalb des Hochspannungs-Leistungsschalters 1 befindlichen Ende der Welle 7 angeordneten Außenverzahnung 14 korrespondiert. Weiterhin weist die Justiereinrichtung 11 einen Hebelarm 15 auf. Der Hebelarm 15 ist radial zur Drehachse der Justiereinrichtung 11 angeordnet. Der Hebelarm 15 weist einen Zapfen 16 auf. Im zusammengebauten Zustand ragt der Zapfen 16 in eine Öffnung eines Nutensteines 17 hinein. Der Nutenstein 17 ist in einer Nut 18 geführt. Durch die Nut 18, über den Nutenstein 17, den Zapfen und den Hebelarm 15 ist die Drehbarkeit der Justiereinrichtung 11 eingeschränkt. Durch eine Verschiebung der Nut 18 längs einer Achse, die rechtwinklig zur Drehachse der Welle 7 bzw. der Justiereinrichtung 11 liegt, ist die Lage der Justiereinrichtung 11 in der Ausnehmung 12 und damit die Lage des Umlenkhebels 9 auf der Welle 7 einstellbar. Zur Einstellung der Nut 18 ist diese mit einem Tragkörper 19 verbunden, welcher ein Langloch 20 aufweist. Das Langloch 20 ist von Befestigungselementen 21a, 21b durchsetzt. Vorteilhafterweise sollten die Befestigungselemente 21a, 21b mehrfach lösbar sein. Dazu eignen sich insbesondere Schraubverbindungen. Nach einem Lösen der Befestigungselemente 21a,b ist der Tragkörper 19 längs des Langloches 20 verschiebbar. Damit ist auch die Nut 18 verschiebbar. Daraus folgend wird eine Drehbewegung des Hebelarmes 15 erzwungen und damit die Justiereinrichtung 11 in ihrer Winkellage in der Ausnehmung 12 eingestellt. Eine Justage bzw. Einstellung des Umlenkhebels 9 kann in einem montierten Zustand des Umlenkhebels 9, das heißt aufgesteckt die Welle 7 und angeflanscht an die Antriebsstange 10, erfolgen.

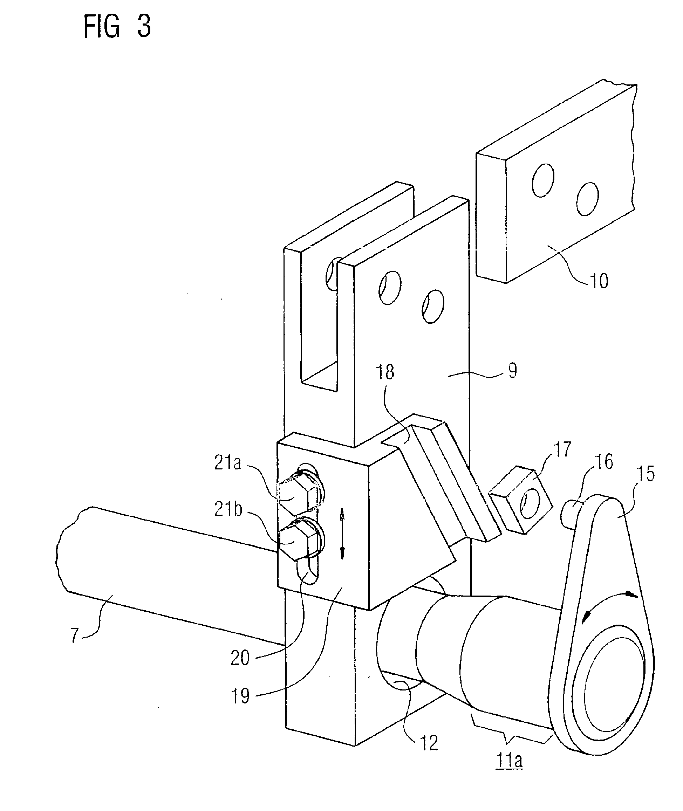

Die Figur 3 zeigte eine Abwandlung der aus der Figur 2 bekannten Justiereinrichtung 11. Die in der Figur 3 dargestellte Justiereinrichtung 11a ist teilweise aus einem Abschnitt der Welle 7 gebildet. Der Abschnitt ist verdickt ausgeführt, kann jedoch auch den Durchmesser der Welle 7 aufweisen. Der die Ausnehmung 12 durchgreifende und in ihr drehbeweglich gelagerte Bereich der Justiereinrichtung 11a ist mit dem Hebel 15 mittels einer Schweißverbindung verbunden.

## Patentansprüche

1. Umlenkhebel (9) mit einer Justiereinrichtung (11),
wobei der Umlenkhebel (9) eine Ausnehmung (12) aufweist und die Justiereinrichtung (11) winkelsteif mit einer Welle (7) verbindbar ist, und wobei die Justiereinrichtung einen Hebelarm (15) aufweist, der an einem justierbaren Anschlag festlegbar ist,
**dadurch gekennzeichnet, dass**
der Anschlag längs einer Achse verschiebbar ist, die rechtwinklig zur Drehachse der Welle (7) liegt, wobei die Ausnehmung (12) drehbeweglich von der Justiereinrichtung (11) durchdrungen ist.

2. Umlenkhebel (9) nach Anspruch 1,
**dadurch gekennzeichnet, dass**
der Anschlag von einer Nut (18) gebildet ist.

3. Umlenkhebel (9) nach Anspruch 2,
**dadurch gekennzeichnet, dass**
in der Nut (18) ein Nutenstein (17) geführt ist, mit welchem der Hebelarm (15) verbunden ist.

4. Umlenkhebel (9) nach einem der Ansprüche 2 oder 3,
**dadurch gekennzeichnet, dass**
bei einer Projektion in Richtung der Drehachse der Welle (7) zwischen der Hebelachse des Umlenkhebels (9) und der Längsachse der Nut (18) ein spitzer Winkel gebildet ist.

5. Umlenkhebel (9) nach einem der Ansprüche 1 bis 4,
**dadurch gekennzeichnet, dass**
die Justiereinrichtung (11) eine Hülse ist.

## Claims

1. Deflection lever (9) comprising an adjusting device (11), the deflection lever (9) having a recess (12) and the adjusting device (11) being able to be connected in an angularly rigid manner to a shaft (7), and the adjusting device having a lever arm (15) which can be secured to an adjustable stop **characterized in that** the stop is displaceable along an axis situated at right angles to the rotation axis of the shaft (7), the recess (12) being penetrated by the adjusting device (11) in a rotationally movable manner.

2. Deflection lever (9) as claimed in Claim 1, **characterized in that** the stop is formed by a groove (18).

3. Deflection lever (9) as claimed in Claim 2, **characterized in that** in the groove (18) a sliding block (17) is guided, to which the lever arm (15) is connected.

4. Deflection lever (9) as claimed in one of Claims 2 or 3, **characterized in that**, in case of a projection in the direction of the rotation axis of the shaft (7), an acute angle is formed between the lever axis of the deflection lever (9) and the longitudinal axis of the groove (18).

5. Deflection lever (9) as claimed in one of Claims 1 to 4, **characterized in that** the adjusting device (11) is a sleeve.

## Revendications

1. Levier (9) de renvoi pourvu d'un dispositif (11) d'ajustement, le levier (9) de renvoi comportant un évidement (12) et le dispositif (11) d'ajustement pouvant être relié à angle fixe à un arbre (7), et le dispositif d'ajustement comportant un bras (15) de levier, qui peut être immobilisé sur une butée réglable,
**caractérisé en ce que** la butée est mobile en translation le long d'un axe qui est perpendiculaire à l'axe de rotation de l'arbre (7), le dispositif (11) d'ajustement passant dans l'évidement (12) en étant mobile en rotation.

2. Levier (9) de renvoi suivant la revendication 1, **caractérisé en ce que** la butée est formée par une rainure (18).

3. Levier (9) de renvoi suivant la revendication 2, **caractérisé en ce qu'**un coulisseau (17) auquel est relié le bras (15) de levier est guidé dans la rainure (18).

4. Levier (9) de renvoi suivant l'une des revendications 2 ou 3, **caractérisé en ce que**, dans une projection en direction de l'axe de rotation de l'arbre (7), un angle aigu est formé entre l'axe de levier du levier (9) de renvoi et l'axe longitudinal de la rainure (18).

5. Levier (9) de renvoi suivant l'une des revendications 1 à 4, **caractérisé en ce que** le dispositif (11) d'ajustement est une douille.
